## Europäisches Patentamt

## European Patent Office

## Office européen des brevets

(19)

(11) Publication number: **0 044 888**
**B1**

(12) **EUROPEAN PATENT SPECIFICATION**

(45) Date of publication of patent specification: **04.07.84**

(51) Int. Cl.³: **F 16 L 15/00**

(21) Application number: **80200729.4**

(22) Date of filing: **30.07.80**

(54) Improvements in or relating to couplings.

(43) Date of publication of application:
**03.02.82 Bulletin 82/5**

(45) Publication of the grant of the patent:
**04.07.84 Bulletin 84/27**

(84) Designated Contracting States:
**AT BE CH DE FR IT LI LU NL SE**

(56) References cited:
FR - A - 2 204 775
GB - A - 17 075
GB - A - 1 111 940

(73) Proprietor: THE PLESSEY COMPANY plc
Vicarage Lane
Ilford Essex, IG1 4AQ (GB)

(72) Inventor: Duncan, William Chambers Wilson
5 Georges Ave
Bugbrooke Northampton NN7 3PW (GB)

(74) Representative: Goodman, Christopher
The Plessey Company plc
Beeston Nottingham NG9 1LA (GB)

Courier Press, Leamington Spa, England.

## Description

This invention relates to couplings and more particularly to couplings which can be readily connected and disconnected and include means for locking the coupling to prevent inadvertent disconnection thereof.

Examples of such couplings are bayonet type couplings and systems using spring loaded ratchet devices and interference fits.

One such coupling is disclosed in French publication number 2,204,775 which consists of two cylindrical bodies which fit together by means of a bayonet type joint, the entry passages in one body being helical instead of axially aligned with the body and the other body being provided with helical ribs which engage the entry passages. Resilient means are provided between the two bodies.

It is an object of the present invention to provided a coupling which is simpler and cheaper to produce than previous known couplings.

According to the present invention a coupling comprises first and second hollow cylindrical bodies, the first body having a helical rib of rectangular cross-section formed on its external surface, and the second body having a helical rib of rectangular cross-section formed on its internal surface, the helical ribs being adapted to mate on relative rotation in one direction between the first and second bodies, characterised in that the helical rib of the first body has a portion which is reduced in width from a position intermediate of its ends whereby the helical rib in the second body may be passed through engagement with the full width portion of the rib into engagement with the reduced width portion by a predetermined degree of relative axial movement between the first and second bodies, resilient means being provided for urging the first and second bodies relatively axially apart so that one side of the helical rib of the first body is urged into contact with one side of the helical rib of the second body, the position at which the helical rib of the first body reduces in width having a step whereby after said predetermined axial movement the end of the helical rib of the second body engages the step due to the urging of the resilient means and relative rotation between the first and second bodies is prevented in the direction to separate the two bodies.

The internal rib preferably comprises one complete pitch only, the end of the rib engaging the step in the external rib after 360° of relative rotation between the bodies.

Preferably, the resilient means comprises a resilient ring located between the two bodies.

An embodiment of the invention will now be described by way of example only with reference to the accompanying drawings in which:—

Figure 1 is a cross-sectional view of one body part of a coupling according to the present invention,

Figure 2 is a side view of another body part of the coupling, and,

Figure 3 is a cross-sectional view of the assembled coupling.

The coupling comprises basically two body parts 10 and 12. The body part 10 is a hollow cylinder with one complete pitch of internal screw thread 13 only, i.e. extending over only 360°. The thread is of square section and the ends 14 and 16 finish abruptly with flat ends. The exterior of the body part 10 is formed with a series of flats so that a suitable tool such as a spanner can be used to rotate the body part 10.

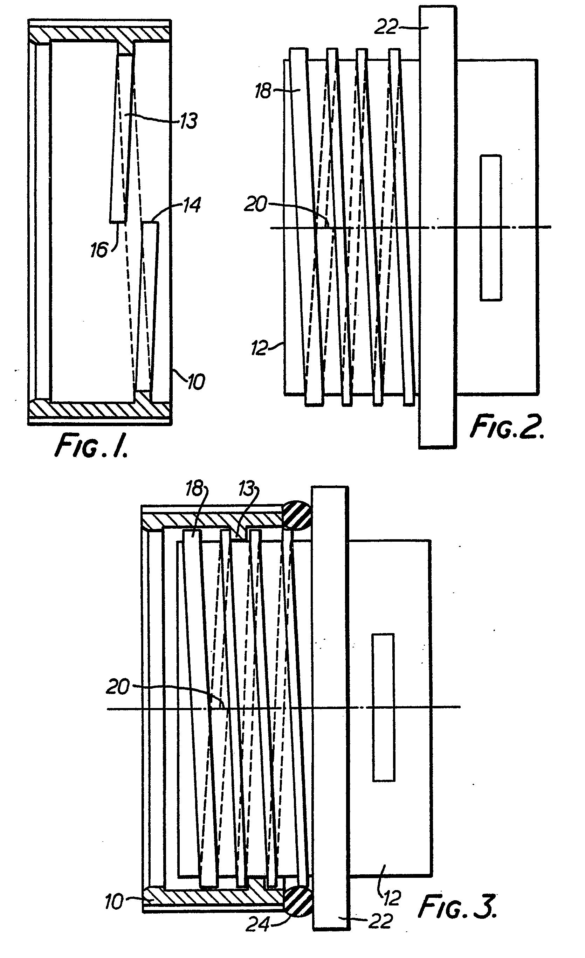

The body part 12 also consists of a hollow cylinder, this time with an external screw thread 18, also of square section and adapted to mate with the thread 13 in the body part 10. The axial width of the square section thread 18 however is not constant, but changes abruptly at a step 20 (shown in broken lines in Figure 2) to a narrower section a portion of the way along the thread. A flange 22 is formed on the outer surface of the body part 12.

To secure the two body parts together a rubber ring 24 is fitted over the body part 12 until it abuts the flange 22 and the body part 10 is fitted over the thread 18 and rotated so that the threads 13 and 18 mate. Initially the ring 24 exerts no force on the two parts, but as the part 10 is rotated the rubber ring 24 is compressed and after a predetermined number of rotations the end 16 of the screw thread 13 rides over the step 20 formed in the thread 13. It will be seen that the action of the rubber ring 24 urges the part 10 away from the flange 22 and the screw thread 13 is thus forced into contact with the right-hand side of the narrower part of the screw thread 18. The body part 10 cannot then be rotated in the opposite direction since the end 16 of the screw thread 13 contacts the step 20 and the body parts are effectively locked together.

Releasing the body part 10 involves compressing the rubber ring 24 by pressing the parts 10 and 12 together until the end 16 of the screw thread 13 can ride over the step 20. The body part 10 can then be unscrewed in a conventional manner.

The body parts 10 and 12 may be formed from plastics material complete with the screw threads and thus can be made simply and cheaply by injection moulding.

The rubber ring 24 also acts to seal the coupling but a metal spring or other resilient material could be used.

The length of the thread 13 and the position of the step 20 may be varied to give the required locking force.

## Claims

1. A coupling comprising first and second hollow cylindrical bodies, the first body having a helical rib of rectangular cross-section formed on its external surface, and the second body having a helical rib of rectangular cross-section formed on its internal surface, the helical ribs being adapted to mate on relative rotation in one direction between the first and second bodies, characterised in that the helical rib (18) of the first body (12) has a portion which is reduced in width from a position intermediate of its ends whereby the helical rib (13) in the second body (10) may be passed through engagement with the full width portion of the rib into engagement with the reduced width portion by a predetermined degree of relative axial movement between the first and second bodies (12 and 10), resilient means (24) being provided for urging the first and second bodies (12 and 10) relatively axially apart so that one side of the helical rib (18) of the first body (12) is urged into contact with one side of the helical rib (13) of the second body (10), the position at which the helical rib (18) of the first body (12) reduces in width having a step (20) whereby after said predetermined axial movement the end of the helical rib (13) of the second body (10) engages the step (20) due to the urging of the resilient means and relative rotation between the first and second bodies (12, 10) is prevented in the direction to separate the two bodies.

2. A coupling as claimed in claim 1 characterised in that the resilient means comprises a resilient ring (24) located between the first and second bodies (12, 10).

3. A coupling as claimed in claim 1 or claim 2 characterised in that the helical rib (13) of the second body (10) extends through 360° only, the end of the helical rib (13) of the second body (10) engaging the step (20) in the helical rib (18) of said first body (12) after 360° of relative rotation between said two bodies.

4. A coupling as claimed in any preceding claim characterised in that the resilient means (24) is positioned so as to exert no force acting between the first and second bodies (12, 10) when the two bodies initially mate with each other.

## Patentansprüche

1. Eine Kupplung bestehend aus einem ersten und zweiten zylindrischen Hohlkörper, wobei auf der Außenfläche des ersten Hohlkörpers eine schraubenförmige Rippe mit rechteckigem Querschnitt und auf der Innenfläche des zweiten Hohlkörpers ebenfalls eine schraubenförmige Rippe mit rechteckigem Querschnitt vorgesehen ist, und die schraubenförmigen Rippen so ausgelegt sind, daß sie beim Drehen der beiden Körper in einer Richtung ineinander eingreifen, dadurch gekennzeichnet, daß die schraubenförmige Rippe (18) des ersten Körpers (12) ab einer Stelle (20) zwischen ihren Endpunkten verjüngt ist, wobei die schraubenförmige Rippe (13) am zweiten Körper (10) durch Eingreifen in den unverjüngten Rippenteil in Eingriff mit dem verjüngten Rippenteil gebracht werden kann, mit einem bestimmten relativen axialen Verschiebungsweg zwischen dem ersten und zweiten Körper (12, 10), und daß ein elastisches Organ die beiden Körper (10, 12) relativ zueinander axial auseinandertreibt, so daß eine Flanke der Rippe (18) des ersten Körpers (12) gegen die eine Flanke der Rippe (13) des zweiten Körpers (10) gedrückt wird, und wobei sich die Rippe (18) des ersten Körpers (12) absatzartig (20) verjüngt, derart, daß nach besagtem axialen Verschiebungsweg das Ende der Rippe (13) des zweiten Körpers (10) aufgrund der Spannung des elastischen Organs am Absatz (20) angreift, und eine relative Drehung der beiden Körper (12, 10) in der Drehrichtung verhindert wird, in der sich die beiden Körper voneinander lösen.

2. Eine Kupplung entsprechend Anspruch 1, dadurch gekennzeichnet, daß das elastische Organ aus einem elastischen Ring (24) besteht, der zwischen dem ersten und zweiten Körper (12, 10) angeordnet ist.

3. Eine Kupplung entsprechend Anspruch 1 oder 2, dadurch gekennzeichnet, daß die Rippe (13) des zweiten Körpers (10) einen Winkel von 360 Grad durchläuft, und das Ende der Rippe (13) des zweiten Körpers (10) nach einer relativen Drehung der beiden Körper um 360 Grad am Absatz (20) in der Rippe (18) des ersten Körpers (12) angreift.

4. Eine Kupplung nach einem der vorausgegangenen Ansprüche, dadurch gekennzeichnet, daß das elastische Organ (24) so angeordnet ist, daß es beim anfänglichen Eingreifen der beiden Körper ineinander keinerlei Kraft auf diese Körper (12, 10) ausübt.

## Revendications

1. Un accouplement comportant un premier et un deuxième corps cylindrique creux, le premier corps ayant une nervure hélicoïdale de coupe rectangulaire formée sur sa surface extérieure, et le deuxième corps ayant une nervure hélicoïdale de coupe rectangulaire formée sur sa surface intérieure, les nervures hélicoïdaies étant conçues pour s'engrener en rotation relative dans un sens entre le premier et le deuxième corps, ce qui est caractérisé par le fait que la nervure hélicoïdale (18) du premier corps (12) comporte une partie dont la largeur est réduite à partir d'une position intermédiaire de ses extrémités, et la nervure hélicoïdale (13) du deuxième corps (10) peut passer par engrènement avec la partie à pleine largeur de la nervure pour engrener avec la partie à largeur réduite, à un degré prédéterminé de mouvement axial relatif entre le premier et le deuxième corps (12 et 10), des moyens d'élasticité étant prévus pour forcer le premier et le deuxième corps (12 et 10) à se séparer axialement relativement, de sorte que l'un des côtés de la nervure hélicoïdale (18) du premier corps (12) soit forcé en contact avec l'un des côtés de la nervure hélicoïdale (13) du deuxième corps (10), la position à laquelle la largeur de la nervure hélicoïdale (18) du premier corps (12) est réduite, comportant un épaulement (20), et, après le mouvement axial prédéterminé mentionné ci-dessus, l'extrémité de la nervure hélicoïdale (13) du deuxième corps (10) enclenche l'épaulement (20), à cause de l'impulsion des moyens d'élasticité, et la rotation relative entre le premier et le deuxième corps (12, 10) est empêchée dans le sens pour séparer les deux corps.

2. Un accouplement selon la revendication 1, caractérisé par la fait que les moyens d'élasticité comportent un anneau élastique (24) situé entre le premier et le deuxième corps (12, 10).

3. Un accouplement selon la revendication 1 ou la revendication 2, caractérisé par le fait que la nervure hélicoïdale (13) deuxième corps (10) ne décrit que 360°, l'extrémité de la nervure hélicoidale (13) du deuxième corps (10) engrenant l'épaulement (20) de la nervure hélicoïdale (18) du premier corps en question (12), après une rotation relative de 360° entre les deux corps dont il s'agit.

4. Un accouplement selon toute revendication précédente, caractérisé par le fait que les moyen d'élasticité (24) sont positionnés pour n'exercer aucune force entre le premier et le deuxième corps (12, 10), lorsque les deux corps s'engrènent à l'origine.

FIG. I.

FIG. 2.

FIG. 3.